# EUROPEAN PATENT APPLICATION

(11) **EP 4 573 917 A1**
(43) Date of publication of application: **25.06.2025**
(21) Application number: 24217395.3
(22) Date of filing: 04.12.2024
(51) Int. Cl.: A23C 19/05, A23C 19/068, A23C 7/04, A01J 11/10

(54) **INDUSTRIAL PRODUCTION PROCESS OF A MATURED HARD CHEESE AND CHEESE OBTAINABLE WITH SAID PROCESS**

(30) Priority: 19.12.2023 IT 202300027084
(71) Applicant: Vittoria Alata Srl, 25020 Offlaga (BS) (IT)
(72) Inventor: CALIGARI, Lorenzo, 25025 Manerbio (IT); COLOSIO, Silvio, 24060 Credaro (IT)
(74) Representative: Mari, Marco Giovanni

(57) **Abstract**

The invention relates to the food sector and concerns an industrial production process of a matured hard cheese and cheese obtainable with said process.

The industrial production process comprising the steps of:
- collecting milk and storing it in a single tank;
- separating milk to obtain cream and at least semi-skimmed milk;
- checking the percentage of the fat fraction;
- adding rennet and whey starter;
- cooking in vats to obtain a cheese mass;
- treating the cheese mass and moulding it;
- salting said cheese wheels;
- maturing said cheese wheels,
wherein:
- said separating step comprises a step of pre-heating said stored raw milk and a centrifugation step, producing cream and skimmed milk with a fat content substantially equal to 0%;
- it comprises a step of eliminating spores and bacteria from said skimmed milk by means of bactofugation;
- it comprises titration of the skimmed milk with spores removed, delivered from the bactofugation process, and addition of cream recovered from the separating step, pasteurized, pre-heated to 65°C and cooled to 35°C, to bring the skimmed milk with spores removed to a fat content of 2.8-3% to obtain titrated milk with spores removed.

## Description

### Technical field of application

The invention is aimed at the food sector and concerns an industrial production process of a matured hard cheese.

The invention also concerns the cheese obtainable with said process.

### Prior art

The most traditional production processes of matured hard cheese comprise the steps of:
- collecting raw cow's milk from two daily milkings and storing it in a single tank;
- separating said milk by means of natural flotation skimming (in steel basins or in multi-level flotation skimmers) to obtain cream and semi-skimmed milk; the flotation skimming process lasts at least 8-10 hours during which the fat globules, which are lighter than the milk, aggregate and rise to the surface forming a dense cream, thus obtaining semi-skimmed milk with a lower fat content than the starting milk;
- checking the percentage of the fat fraction present in said semi-skimmed milk which, according to the protocol, must be lower than 2.7%;
- adding preservatives and/or anti-mould products such as, for example, lysozyme, a protein present in the whites of hen eggs, to break down any bacteria that may be present in the milk and cause abnormal fermentation that could then compromise correct maturing of the cheese;
- adding a whey starter, produced by the previous day's processing and rich in lactic bacteria, to start conversion of the milk into cheese;
- raising the temperature to 31-33°C and adding animal rennet from the stomach of a calf;
- cooking in bell-shaped double-bottomed copper vats to obtain a cheese mass;
- extracting the cooked cheese mass and moulding it to obtain the desired cheese wheels;
- immersing the cheese wheels obtained in a solution of water and salt to salt them, for a duration varying from 21 to 28 days, according to the type of saline solution, size of the wheels and level of salting required; the salt has the function of flavouring the cheese, eliminating the residual whey and forming the rind;
- maturing said cheese wheels for a minimum of 9 months in maturing rooms with controlled temperature (15-22°C) and humidity.

This production process has some limits and drawbacks.

The milk-cream separation process is carried out by means of flotation skimmers, but the natural flotation skimming of the fat depends on factors intrinsic to the milk and on technological factors, thus making the process step very variable. The flotation skimming capacity of the milk varies depending on: diet and metabolic state of the cows, production parameters and lactation stage, milk composition characteristics. The entity of the surfacing of the fat globules is negatively correlated with the temperature of the milk and is adversely affected by the splashing motion of the milk during the milking and transport operations.

To counter the risks of abnormal fermentation in the cheese, preservatives and anti-mould products are used. Lysozyme is a natural substance, and the consumption of food containing it does not pose any particular risks for the consumer, with the exception of persons who are allergic to egg proteins. However, since it is a preservative, it must be specified in the label and can induce the consumer to make different food choices.

In general, the production process is insufficiently industrialized, lengthy, not cheap and with a certain environmental impact: analysing in detail the impact of the operations carried out during cheese making and maturing, the biggest impact is connected with the consumption of electricity (for maintaining the controlled temperature and humidity parameters in the premises used), necessary above all in the lengthy salting and maturing steps.

The maturing step is variable, but the cheese is sold at a minimum of 6 months after production.

From the Italian patent application102016000098539 a process for the production of cheese is known that uses starting milk which is heated to a temperature between 32°C and 54°C and subsequently skimmed until obtaining milk with a fat value of 2.60% - 3.20%; microorganisms are then removed in a first and a second bactofugation machine from said milk not totally skimmed.

### Presentation of the invention

The object of the invention is to overcome these limits.

The object of the invention is to devise an industrial production process of a matured hard cheese that operates continuously and automatically, without requiring the intervention of skilled operators in the most delicate steps of the process, and which is rapid and does not require long periods of time for the steps prior to cooking and for the salting and maturing steps.

A further object is to obtain a matured hard cheese without preservatives and with a low salt content.

The objects are achieved by an industrial production process of a matured hard cheese made from milk and comprising the steps of:
- collecting milk from one or more daily milkings and storing it in a single tank;
- separating said raw milk to obtain cream and at least semi-skimmed milk;
- checking the percentage of the fat fraction present in said at least semi-skimmed milk;
- adding rennet and whey starter;
- cooking in vats to obtain a cheese mass;
- treating the cheese mass thus produced and moulding it to obtain the desired cheese wheels;
- salting said cheese wheels;
- maturing said cheese wheels,

characterized in that:
- said separation step comprises a step of pre-heating said stored raw milk and a centrifugation step, where said centrifugation step produces cream and skimmed milk with a fat content substantially equal to 0%;
- between the step of separating said raw milk to obtain cream and at least semi-skimmed milk and the step of checking the percentage of the fat fraction present in said at least semi-skimmed milk, it comprises a step of eliminating spores and bacteria from said skimmed milk by means of bactofugation;
- said step of checking the percentage of the fat fraction present in said at least semi-skimmed milk comprises titration of the skimmed milk with spores removed, delivered from the bactofugation process, and addition of cream obtained from the separating step to bring the skimmed milk with spores removed to a fat content of 2.8 - 3% to obtain a titrated milk with spores removed, wherein said re-added cream delivered from the separating step, before being added, undergoes a pasteurizing step and a pre-heating step to 65°C and then immediately cooled to 35°C.

The objects are also achieved with a matured hard cheese obtainable via the above-mentioned process.

Further characteristics of the process and of the cheese thus obtained are described in the dependent claims.

The substantial advantages of the invention are indicated below.

Thanks to the industrialization of the process, the milk used, collected within 4 hours from the end of milking, is transformed within 10 hours from collection.

The rapidity of the transformation is guaranteed by the in-line titration followed by sanification by means of centrifugal force, thus improving upon the practice of flotation skimming (a few minutes compared to 10-15 hours). The practice of centrifugation provides a skimmed milk with 0% fat which only subsequently can be integrated with the re-addition of cream to obtain the exact percentage of fat necessary for the production of cheese.

The use of bactofugation to eliminate spores and bacteria from the milk means that it is no longer necessary to use lysozyme, thus guaranteeing a total absence of additives and preservatives in the end product.

Plant-derived microbial rennet is also suitable, unlike calf rennet, for the production of cheese for vegetarians (milk-egg vegetarians).

A salting system is used with the cheese wheels left in a saturated brine solution for a shorter period compared to the current practice, nevertheless achieving complete uniform salting with a reduced quantity of salt in the cheese wheels.

Even more advantageously, thanks to the entirely aseptic processing of the milk, with a very low quantity of spores and bacteria, the maturing step can be significantly reduced: after 5 months the cheese wheels are already ready for sale.

The process is totally automatable.

### Detailed disclosure of a preferred embodiment of the invention

The following part of the description illustrates an industrial production process of a matured hard cheese which is carried out in automatic continuous mode.

The milk used is cow's milk, but the same advantages can be obtained also using other types of milk, for example buffalo, or a mixture thereof.

According to a particular non-limiting aspect of the invention, the cow's milk collected is all Italian, from farms located mainly in Lombardy, Veneto, Emilia Romagna and Piedmont. The characteristics of the milk collected are appropriate for the production of an Italian hard cheese.

The first step of the process according to the invention entails collecting the raw milk from two daily milkings and storing it in a single tank at a temperature between 8 and 10°C.

The raw milk is pre-heated by means of a PHE (plate heat exchanger) and brought to a temperature of 35°C.

Said pre-heating is necessary for the subsequent skimming step, which is carried out by a centrifuge machine.

The centrifugation step has the object of completely skimming the raw milk being treated, thus obtaining on the one hand the cream and on the other skimmed milk with fat content substantially equal to 0%.

An important step of the process according to the invention is the step of eliminating spores and bacteria from said skimmed milk by means of bactofugation, in order to avoid the risk of delayed swelling of the cheese wheels due to fermentation caused by bacteria and spores of butyric ferments (in particular Clostridium tyrobutyricum and Clostridium sporogenes). The spores of these mesophilic bacteria, resistant to pasteurization, enter the milk via ambient contamination during milking, and also via animal feed containing particular types of fodder, in particular silage.

Bactofugation consists in high speed centrifugation of the raw milk to eliminate the spores, together with a part of the milk.

The solution subject of the invention is particularly advantageous since it comprises two consecutive bactofugation stages, both performed at 35°C.

The skimmed milk coming out of the second bactofugation stage has at least a 98% reduction in the percentage of spores and bacteria.

Just as the skimmed milk undergoes bactofugation to eliminate spores and bacteria, also the cream coming out of the centrifugation step must be treated to minimize the bacterial load. For said purpose, the cream undergoes a pasteurization step comprising a first heating step to 65°C, lasting 10-15 seconds, and a subsequent immediate cooling step to 35°C.

After the pasteurization step, the cream undergoes a bactofugation step.

Both the cream recovered from the skimming, pasteurizing and bactofugation steps, and the skimmed milk with spores removed, delivered from the bactofugation process, are sent to an in-line titrator.

In the titrator, a part of the cream with spores removed is reintegrated in the skimmed milk with spores removed, in order to obtain an exact titre in terms of fat percentage in the milk being processed.

The milk with spores removed, delivered from the in-line titrator, has a fat content of 2.8-3%.

By "fat percentage" we mean, according to the present invention, the ratio by weight of the quantity of fat content with respect to the total composition of the milk.

The titrated milk with spores removed is sent to a cooling step to 10°C with heat recovery, advantageously via the same heat exchanger as the one used for pre-heating the skim.

Immediately after the cooling, the milk is left to rest for at least 4 hours before proceeding to the cooking step.

The cooking step is carried out inside copper vats with double bottom according to the known technique, apart from the rennet used which is advantageously not of animal origin (extract of calf's stomach) but plant-derived (produced from the cultivation of specific fungi), thus making the end cheese suitable also for vegetarians.

The cooking step begins with pre-heating of the milk with spores removed and titrated to a temperature of 37°C.

The pre-heated milk continuously feeds the vats in an automatic sequential manner.

The process for each vat entails:
- dosing of milk/plant-derived microbial rennet/whey starter;
- control of stirring operations;
- heating of vat to a temperature of 53°C;
- coagulation and formation of the cheese mass;
- whey emptying and extraction of the cheese mass;
- washing of the vat.

The above-mentioned cycle lasts approximately 55 minutes after which the vat is re-loaded. The cycles are continuous throughout the day.

Once the cheese mass has been extracted from the vats, it is treated in a forming station in which it is arranged in moulds so as to obtain the desired cheese wheels.

The final stages of the production process comprise:
- salting of said cheese wheels in saturated brine solution with density of approximately 21-23°Bè, at a temperature of 15-16°C, for a time shorter than or equal to 12 days;
- maturing of said cheese wheels, for a minimum of 5 months.

During the maturing period, the wheels are turned over and cleaned at regular intervals, according to the usual practice, until completion of the maturing process.

The matured hard cheese according to the invention has the following characteristics:
- it has no preservatives, since the bactofugation has been used to eliminate spores and bacteria from skimmed milk and cream therefore does not require addition of the traditional lysozyme extracted from the whites of hen's eggs;
- it is a cheese suitable for consumption by vegetarians as it does not contain animal-derived rennet;
- it has a reduced salt content.

In particular, thanks to the salting system with the cheese wheels staying in saturated brine for a shorter period (maximum 12 days), compared to processing of the traditional Italian matured hard cheese which requires a minimum of 14/30 days, the cheese subject of the invention has a salt content of only 1.2g per 100g of product, as against 1.8g - 2.8g in other matured hard cheeses.

## Claims

1. Industrial production process of a matured hard cheese made from milk comprising the steps of:
- collecting milk from one or more daily milkings and storing it in a single tank;
- separating said raw milk to obtain cream and at least semi-skimmed milk;
- checking the percentage of the fat fraction present in said at least semi-skimmed milk;
- adding rennet and whey starter;
- cooking in vats to obtain a cheese mass;
- treating the cheese mass thus produced and moulding it to obtain the desired cheese wheels;
- salting said cheese wheels;
- maturing said cheese wheels,
**characterized in that**:
- said separating step comprises a step of pre-heating said stored raw milk and a centrifugation step, where said centrifugation step produces cream and skimmed milk with a fat content substantially equal to 0%;
- between the step of separating said raw milk to obtain cream and at least semi-skimmed milk and the step of checking the percentage of the fat fraction present in said at least semi-skimmed milk, it comprises a step of eliminating spores and bacteria from said skimmed milk by means of bactofugation;
- said step of checking the percentage of the fat fraction present in said at least semi-skimmed milk comprises titration of the skimmed milk with spores removed, delivered from the bactofugation process, and addition of cream recovered from the separating step to bring the skimmed milk with spores removed to a fat content of 2.8-3% to obtain titrated milk with spores removed, wherein said re-added cream delivered from the separating step, before being added, undergoes a pasteurizing step and a pre-heating step to 65°C and then immediately cooled to 35°C.

2. The industrial production process according to claim 1, **characterized in that** said bactofugation comprises two stages in succession, at a temperature of 35°C, to eliminate at least 98% of spores and bacteria from said skimmed milk and obtain milk with spores removed.

3. The industrial production process according to claim 1, **characterized in that** said pre-heating step brings the temperature of said raw milk to 35°C.

4. The industrial production process according to claim 1, **characterized in that** after the pasteurization step, said cream undergoes a bactofugation step.

5. The industrial production process according to claim 1, **characterized in that** between said step of checking the percentage of the fat fraction present in said at least semi-skimmed milk and said step of adding rennet and whey starter, it comprises a step of cooling to 10°C and a resting step.

6. The industrial production process according to claim 5, **characterized in that** between said resting step and said step of adding rennet and whey starter, it comprises a step of preheating the titrated milk with spores removed to a temperature of 37°C.

7. The industrial production process according to claim 1, **characterized in that** said step of adding rennet to said at least semi-skimmed milk comprises the step of providing a plant-derived microbial rennet.

8. The industrial production process according to claim 1, **characterized in that** said step of salting is carried out in saturated brine solutions for a maximum period of 12 days.

9. A matured hard cheese obtainable with the process according to any one of claims 1 to 8.

10. The matured hard cheese according to claim 9, **characterized in that** it has no preservatives.

11. The matured hard cheese according to claim 9, **characterized in that** it comprises plant-derived microbial rennet.

12. The matured hard cheese according to claim 9, **characterized in that** it contains a percentage of salt equal to 1.2%.
